# FASCICULE DE BREVET EUROPEEN

(11) **EP 3 106 483 B1**
(45) Date de publication et mention de la délivrance du brevet: **25.08.2021**
(21) Numéro de dépôt: 16164240.0
(22) Date de dépôt: 06.07.2011
(51) Int. Cl.: C08F 290/06, C09D 155/00, D21H 19/56

(54) **POLYMÈRES (MÉTH)ACRYLIQUES PEIGNES AMPHIPHILES ET HYDROSOLUBLES OU NON HYDROSOLUBLES**
AMPHIPHILE WASSERLÖSLICHE UND NICHT-WASSERLÖSLICHE (METH)ACRYL-KAMMPOLYMERE
(METH)ACRYLIC COMB POLYMERS THAT ARE AMPHIPHILIC AND WATER-SOLUBLE OR WATER-INSOLUBLE

(30) Priorité: 19.08.2010 FR 1056658
(43) Date de publication de la demande: 21.12.2016
(62) Demande divisionnaire de: 11746315.8
(73) Titulaire: COATEX, 69730 Genay (FR)
(72) Inventeur: SUAU, Jean-Marc, 69480 LUCENAY (FR)
(74) Mandataire: Balmefrezol, Ludovic Francis Pierre

(56) Documents cités:
- EP-A1- 1 160 265
- WO-A1-2007/069037
- US-B1- 6 530 950
- None

## Description

La présente invention concerne le domaine du papier et porte plus particulièrement sur certains additifs connus sous l'expression de «modificateurs de rhéologie » et « agents rétenteurs d'eau ». Ces derniers entrent dans la formulation des sauces de couchage, qui sont des formulations aqueuses destinées à être appliquées à la surface de la feuille de papier.

L'invention concerne plus précisément certains additifs polymériques ayant la propriété d'augmenter la viscosité des sauces sous bas gradient de cisaillement et de la diminuer à haut gradient, tout en améliorant la rétention d'eau desdites sauces. Ce compromis correspond à l'obtention d'une sauce :
- manipulable (augmentation de la viscosité à bas gradient),
- exploitable en couchage à haute vitesse ou extrait sec élevés (diminution de la viscosité à haut gradient, pour contrebalancer l'augmentation de la pression de lame),
- dont l'eau et les substances hydrosolubles migrent peu au sein de la feuille de papier (on limite ainsi l'évolution de la rhéologie de la sauce non utilisée et recyclée dans le procédé de couchage).

Ces additifs sont des polymères hydrosolubles ou non hydrosolubles à structure peigne, disposant d'un squelette (méth)acrylique, sur lequel sont greffées des chaînes latérales contenant au moins un monomère hydrophobe du type styrène ou ester (méth)acrylique en C1 à C4 et au moins un monomère hydroxy ou méthoxy polylakylène glycol, caractérisés en ce qu'ils sont partiellement ou totalement neutralisés par un ou plusieurs agents de neutralisation. Les teneurs en monomères sont telles que ledit polymère est amphiphile, car il est à la fois riche en monomère hydrophobe et en monomère polylakylène glycol.

Dans le cadre de la fabrication de la feuille de papier par couchage, on dépose sur la surface du papier support une composition aqueuse dénommée sauce de couchage dont la fonction est de conférer à ladite feuille un certain nombre de propriétés, comme l'opacité, la brillance, la blancheur ou encore l'imprimabilité par les procédés d'impression offset ou héliogravure.

Ces formulations sont constituées d'eau, d'une ou plusieurs charges minérales, d'un ou plusieurs liants hydrosolubles ou non, ainsi que de divers additifs tels que des dispersants, des agents rétenteurs d'eau, des azurants optiques, des modificateurs de rhéologie, etc.

Au niveau de la rhéologie de la sauce, il est tout d'abord important de disposer d'un produit aisément pompable et filtrable dans les circuits d'alimentation du procédé de couchage et ne présentant pas de tendance à la formation de mousses ou d'éclaboussures ainsi qu'une sédimentation trop rapide. Cette exigence correspond à une augmentation de la viscosité sous bas gradient de cisaillement, ou viscosité Brookfield™ mesurée à 100 tours/minute et à 25°C avec le dispositif du même nom, sans quoi la sauce est trop liquide.

Une autre caractéristique rhéologique importante est la viscosité sous haut gradient de cisaillement, telle qu'exprimée à travers une valeur de viscosité ACAV à 25°C mesurée dans un viscosimètre capillaire où la sauce peut subir des gradients de cisaillement élevés (de 10⁵ à 3 x 10⁶ s⁻¹) du même ordre de grandeur que ceux observés pendant le procédé de couchage lors de l'application de la lame de couchage raclant l'excès de sauce déposée. La viscosité sous haut gradient de cisaillement est un déterminant de la pression de lame à exercer. Plus elle est importante, plus la pression de lame doit être élevée pour le contrôle du poids de couche déposé.

Or l'augmentation de l'extrait sec des sauces et des vitesses de couchages correspond à une tendance observée depuis quelques années car elle génère des avantages économiques et/ou qualitatifs. Néanmoins, l'augmentation de l'extrait sec conduit à une élévation de la viscosité sous cisaillement et par conséquence à une hausse des pressions de lame nécessaires. Les vitesses de couchage plus élevées provoquent quant à elles une augmentation de la force hydraulique sur la lame et ainsi de la pression à exercer, ce qui peut conduire à des débordements de la sauce (« baves » ou « perles »). Cette problématique est relatée dans le document WO 84/04491.

A cette double exigence, s'ajoute la nécessité de réduire le phénomène de migration de l'eau et des espèces hydrosolubles à travers le papier. On cherche à réduire au maximum cette migration, en vue d'éviter une évolution de la rhéologie de la sauce de couchage non utilisée et recyclée dans le procédé de couchage. On parle de phénomène de « rétention d'eau » qu'on cherche à améliorer, c'est-à-dire à augmenter.

En matière de modificateurs de rhéologie et d'agents rétenteurs d'eau, on a développé depuis quelques années une classe particulière de polymères peignes disposant d'un squelette (méth)acrylique avec des chaînes latérales de type hydroxy ou méthoxy polyalkylène glycol contenant éventuellement un monomère hydrophobe tel que l'acrylate d'éthyle ou de butyle. Il s'agit de solutions aqueuses de polymères hydrosolubles, comme notamment développées par la société COATEX™ à travers sa gamme de produits Rheocarb™ dans le domaine du papier.

De nombreux brevets d'utilisation décrivent aujourd'hui les propriétés applicatives de ces structures dans une sauce de couchage : WO 01/96007 A1, WO 04/044022 A1, WO 04/041883 A1, WO 07/069037 A1 et WO 08/149226 A1. Ces polymères peuvent être introduits dans la sauce de couchage par l'intermédiaire de la suspension de matières minérales dont ils améliorent la rhéologie (WO 01/96007 A1). Outre leur capacité à augmenter la viscosité Brookfield™ de la sauce, ils permettent d'améliorer l'azuration optique (WO 04/044022 A1) et la brillance (WO 04/041883 A1) de celle-ci. Ils sont aussi connus pour augmenter la rétention d'eau de la sauce (WO 07/069037 A1), mais aussi leur viscosité sous haut gradient de cisaillement (WO 08/149226 A1).

La Demanderesse souligne que, dans ces documents :
- le monomère hydrophobe du type acrylate d'éthyle ou styrène est toujours facultatif (comme notamment indiqué dans les WO 01/96007 A1, WO 04/044022 A1, WO 04/041883 A1 et WO 07/069037 A1) ;
- lorsqu'il est présent, sa concentration en poids est toujours inférieure à 20 % du poids total des monomères engagés (5 % en poids d'acrylate d'éthyle dans l'essai n° 13 du document WO 04/044022 et de 4,5 % à 19,5 % en poids d'acrylate d'éthyle dans les essais n° 4 à 7 du document WO 01/96007 A1) ;
- il n'est fait aucune allusion au rôle possible joué par un tel monomère ; de plus, rien ne peut attirer l'attention sur lui, tant les 5 produits mentionnés ci-dessus apparaissent anecdotiques parmi les 225 essais rassemblés dans lesdits documents ;
- le polymère objet des inventions correspondantes est toujours décrit comme hydrosoluble ;
- les exemples du document WO 08/149226 A1 font état d'une augmentation de la viscosité ACAV des sauces de couchage, ce qui rend a priori les polymères correspondant inadaptés à un couchage à extrait sec et/ou vitesse de dépose élevés.

Or, poursuivant ses recherches en vue de mettre au point un polymère capable d'augmenter la viscosité Brookfield™ d'une sauce, de diminuer sa viscosité ACAV tout en augmentant sa rétention d'eau, la Demanderesse a su identifier une classe particulière de polymères peignes (méth)acryliques, caractérisés en ce qu'ils sont des polymères hydrosolubles ou non hydrosolubles, à la fois riches en monomère hydrophobe du type styrène ou ester acrylique en C1 à C4 et riches en monomère hydroxy ou méthoxy polyalkylène glycol, caractérisés en ce qu'ils sont partiellement ou totalement neutralisés par un ou plusieurs agents de neutralisation.

En indiquant que les polymères objets de la présente invention sont non hydrosolubles, la Demanderesse entend signifier que lesdits polymères, en l'état, c'est à dire sous forme acide, ne sont pas solubles dans l'eau (à la différence des polymères exemplifiés dans les documents cités précédemment, qui sont hydrosolubles sous forme acide). En revanche, uns fois salifiés, les polymères de la présente invention peuvent devenir solubles dans l'eau.

De manière inattendue car non suggérée par les documents précités, et contraire à l'enseignement du document WO 08/149226 A1 sur la viscosité ACAV, la sélection particulière opérée par la Demanderesse permet l'amélioration des 3 propriétés précitées. Cette amélioration correspond même à un compromis jamais réalisé avec les polymères ou autres additifs de l'art antérieur : non seulement on augmente ici la viscosité Brookfield™, mais on diminue aussi la viscosité ACAV des sauces et ce, par rapport à la même sauce ne contenant pas d'additif : un tel résultat n'avait encore jamais été atteint. En ce sens, les polymères objets de la présente invention se comportent avantageusement comme des agents épaississants à bas gradient de cisaillement, et rhéofluidifiants sous haut gradient de cisaillement. De plus, ils se révèlent être des agents rétenteurs d'eau très efficaces. Ces résultats en font des candidats idéaux pour des procédés de couchage à extrait sec et/ou vitesse de dépose élevés. Seule la Demande de Brevet FR 2 958 664 (n° de dépôt : FR 10 52605) était parvenue à un tel résultat au niveau des propriétés rhéologiques des sauces mais ce, pour des doses plus importantes, et sans maintien de la rétention d'eau.

De manière plus précise, les produits objets de la présente invention se présentent sous forme de dispersions aqueuses de particules de polymère non hydrosoluble ou soluble dans l'eau. Ledit polymère est lui-même caractérisé en ce qu'il est constitué, en % en poids du poids total des monomères engagés :
a) de 30 % à 60 % d'un premier monomère hydroxy et/ou méthoxy polyalkylène glycol,
b) de 20 % à 60 % d'un deuxième monomère hydrophobe choisi parmi le styrène et les esters (méth)acryliques ayant de 1 à 4 atomes de carbone,
c) de 0,1 % à 20 % d'un troisième monomère carboxylique choisi parmi les acides acrylique et méthacrylique,
d) de 0 à 10 % d'un quatrième monomère éventuel dit « associatif »,
e) de 0 à 5 % d'un cinquième monomère éventuel dit « réticulant »,
la somme des % en poids des monomères a) à e) étant égale à 100 %, et en ce qu'il est partiellement ou totalement neutralisé par un ou plusieurs agents de neutralisation.

Le % de monomère hydrophobe b) supérieur à 20 % assure notamment la nouveauté des polymères selon la présente invention, à l'égard de ceux décrits dans l'art antérieur déjà cité. Il contribue en outre au caractère non hydrosoluble des produits objets de l'invention. Le % de monomère hydroxy et/ou méthoxy polyalkylène glycol supérieur à 30 % assure notamment la nouveauté à l'égard de latex déjà existants, et stabilisés à partir de tels motifs (voir notamment les documents EP 1 981 920 A1 et WO 94/24202 A1). C'est le choix de l'ensemble des % précités qui conduit à des structures nouvelles et inventives, permettant de résoudre le problème technique complexe déjà évoqué dans le domaine des sauces de couchage.

Aussi, un premier objet de la présente invention réside dans un polymère hydrosoluble ou non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec :
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,
la somme des % a), b), c), d) et e) étant égale à 100 %, caractérisé en ce qu'il est partiellement ou totalement neutralisé par un ou plusieurs agents de neutralisation.

Cette structure, même si elle est nouvelle, est obtenue par des procédés de polymérisation classiques, mettant en œuvre des systèmes catalytiques connus comme décrit dans le document EP 1 981 920 A1 précité, mais aussi dans le document EP 0 819 704 A1.

Ce polymère est aussi caractérisé en ce qu'il présente une masse molaire moyenne en poids comprise entre 1 000 000 et 6 000 000 g/mol, telle que déterminée par GPC. On pourra notamment se reporter à la technique de mesure décrite dans le document WO 07/069037 A1.

Ledit polymère est obtenu par des procédés connus de copolymérisation radicalaire conventionnelle en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Il est obtenu sous forme acide et éventuellement distillé et il est partiellement ou totalement neutralisé par un ou plusieurs agents de neutralisation choisis préférentiellement parmi les hydroxydes de sodium et de potassium et leurs mélanges.

Un deuxième objet de la présente invention réside dans une dispersion aqueuse contenant de 0,1 % à 50 % en poids du polymère précité, par rapport à leur poids total.

Ce polymère peut alors être mis en oeuvre dans une sauce de couchage papetière, dont il augmente la viscosité Brookfield™, diminue la viscosité ACAV, et améliore la rétention d'eau.

Cette sauce contient de manière plus précise :
1) de 3 parts à 20 parts, préférentiellement de 5 parts à 15 parts en poids sec de liant, pour 100 parts en poids sec de matière minérale,
2) de 0,1 part à 2 parts, préférentiellement de 0,1 à 1,5 part en poids sec du polymère précité, pour 100 parts en poids sec de matière minérale,
3) de l'eau dans une quantité en poids comprise entre 20 % et 80 %, par rapport au poids total de la sauce de couchage.

La Demanderesse indique que l'homme du métier peut alors ajouter d'autres additifs entrant dans la composition habituelle d'une sauce de couchage, tels que des biocides, des agents anti mousse, des azurants optiques et des supports d'azurant optique, sans pour autant que cette liste soit exhaustive.
La sauce contient aussi une matière minérale choisie parmi le carbonate de calcium naturel ou synthétique, le kaolin, le talc et les mélanges de ces charges.

Son liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

Enfin, dans une variante particulière correspondant à une sauce dite « haut extrait sec », celle-ci contient de 20 % à 35 % en poids d'eau.

La fonction du polymère précité, lorsqu'il est mis en œuvre dans une sauce de couchage papetière ayant les propriétés indiquées plus haut, est celle d'agent à la fois rétenteur d'eau, augmentant la viscosité Brookfield™ et réduisant la viscosité ACAV.

### EXEMPLES

Pour chacun de ces essais, on réalise une sauce de couchage constituée de :
- 100 parts en poids sec de carbonate de calcium commercialisé par la société OMYA™ sous le nom de Setacarb™ HG (à 78 % d'extrait sec),
- 8 parts en poids sec (par rapport au poids sec de carbonate de calcium) d'un latex styrène-butadiène commercialisé par la société DOW™ CHEMICALS sous le nom DL 966 (solution à 50 % d'extrait sec),
- 0,5 part en poids sec (par rapport au poids sec de carbonate de calcium) d'alcool polyvinylique commercialisé par la société CLARIANT™ sous le nom Mowiol™ 4-98 (solution à 25,2 % d'extrait sec),
- 0,5 part en poids sec (par rapport au poids sec de carbonate de calcium) d'un azurant optique commercialisé par la société BAYER™ sous le nom de Blancophor™ P (solide),

L'extrait sec de ladite sauce est fixé à 72 % de son poids total.
Son pH est ajusté à 8,6 par addition de soude.

Pour chaque sauce, on détermine :
- sa viscosité Brookfield™ à 100 tours/minute à 25°C,
- sa viscosité ACAV sous un gradient de cisaillement égal à 10⁶ s⁻¹ et à 25°C,
- sa rétention d'eau, avec un appareil du type AAGWR commercialisé par la société GRADEK™, selon la méthode décrite dans la Demande de Brevet française n° 05 12797 déjà citée dans le présent document.

### Essai n° 1

Cet essai constitue un témoin et ne met pas en œuvre d'additif.

### Essai n° 2

Cet essai illustre l'art antérieur, selon les polymères décrits dans le document WO 2007/069037.

Il met en œuvre 0,15 part en poids sec d'un copolymère constitué de, en % en poids de chaque monomère :
- 6 % d'acide acrylique et 1,8 % d'acide méthacrylique,
- 92,2 % d'un monomère de formule R - (OE)ₘ - (OP)ₙ - R' dans laquelle R représente le groupe méthacrylate, R' représente le radical méthyle, avec m = 113 et n = 0,
son poids moléculaire étant égal à 250 000 g/mole, comme déterminé selon la méthode décrite dans le document WO 2007/069037.

### Essai n° 3

Cet essai illustre l'art antérieur, selon les polymères décrits dans le document WO 2007/069037.

Il met en œuvre 0,15 part en poids sec d'un copolymère constitué de, en % en poids de chaque monomère :
- 15 % d'acide acrylique et 5 % d'acide méthacrylique,
- 80 % d'un monomère de formule R - (OE)ₘ - (OP)ₙ - R' dans laquelle R représente le groupe méthacrylate, R' représente le radical méthyle, avec m = 113 et n = 0,
son poids moléculaire étant égal à 970 000 g/mole, comme déterminé selon la méthode décrite dans le document WO 2007/069037.

### Essai n° 4

Cet essai illustre l'art antérieur, selon les polymères décrits dans le document WO 2007/069037.

Il met en œuvre 0,15 part en poids sec d'un copolymère constitué de, en % en poids de chaque monomère :
- 30 % d'acide acrylique et 5 % d'acide méthacrylique,
- 65 % d'un monomère de formule R - (OE)ₘ - (OP)ₙ - R' dans laquelle R représente le groupe méthacrylate, R' représente le radical méthyle, avec m = 113 et n = 0,
son poids moléculaire étant égal à 1 850 000 g/mole, comme déterminé selon la méthode décrite dans le document WO 2007/069037.

### Essai n° 5

Cet essai illustre l'art antérieur, selon les polymères décrits dans le document WO 2007/069037.

Il met en œuvre 1 part en poids sec du copolymère mis en œuvre dans l'essai n° 4.

### Essai n° 6

Cet essai met en œuvre 1 part en poids sec d'un copolymère constitué de, en % en poids de chaque monomère :
a) 34 % d'un monomère de formule R - (OE)ₘ - (OP)ₙ - R' dans laquelle R représente le groupe méthacrylate, R' représente le radical méthyle, avec m = 113 et n = 0,
b) 58 % d'acrylate d'éthyle,
c) 8 % d'acide acrylique,
son poids moléculaire étant égal à 38 000 g/mole, comme déterminé selon la méthode décrite dans le document WO 2007/069037.

### Essai n° 7

Cet essai met en œuvre 1 part en poids sec d'un copolymère constitué de, en % en poids de chaque monomère :
a) 38 % d'un monomère de formule R - (OE)ₘ - (OP)ₙ - R' dans laquelle R représente le groupe méthacrylate, R' représente l'hydrogène, avec m = 70 et n = 30,
b) 54 % d'acrylate d'éthyle,
c) 8 % d'acide acrylique,
son poids moléculaire étant égal à 45 000 g/mole, comme déterminé selon la méthode décrite dans le document WO 2007/069037.

### Essai n° 8

Cet essai met en œuvre 1 part en poids sec d'un copolymère constitué de, en % en poids de chaque monomère :
a) 40 % d'un monomère de formule R - (OE)ₘ - (OP)ₙ - R' dans laquelle R représente le groupe méthacrylate, R' représente l'hydrogène, avec m = 70 et n = 30,
b) 55 % d'acrylate d'éthyle,
c) 5 % d'acide acrylique,
son poids moléculaire étant égal à 39 000 g/mole, comme déterminé selon la méthode décrite dans le document WO 2007/069037.

### Essai n° 9

Cet essai met en œuvre 1 part en poids sec d'un copolymère constitué de, en % en poids de chaque monomère :
a) 44 % d'un monomère de formule R - (OE)ₘ - (OP)ₙ - R' dans laquelle R représente le groupe méthacrylate, R' représente l'hydrogène, avec m = 70 et n = 30,
b) 48 % d'acrylate d'éthyle,
c) 8 % d'acide acrylique,
son poids moléculaire étant égal à 51 000 g/mole, comme déterminé selon la méthode décrite dans le document WO 2007/069037.

### Essai n° 10

Cet essai met en œuvre 1 part en poids sec d'un copolymère constitué de, en % en poids de chaque monomère :
a) 43 % d'un monomère de formule R - (OE)ₘ - (OP)ₙ - R' dans laquelle R représente le groupe méthacrylate, R' représente l'hydrogène, avec m = 50 et n = 50,
b) 48 % d'acrylate d'éthyle,
c) 9 % d'acide acrylique,
son poids moléculaire étant égal à 54 000 g/mole, comme déterminé selon la méthode décrite dans le document WO 2007/069037.

### Essai n° 11

Cet essai met en œuvre 1 part en poids sec d'un copolymère constitué de, en % en poids de chaque monomère :
a) 40 % d'un monomère de formule R - (OE)ₘ - (OP)ₙ - R' dans laquelle R représente le groupe méthacrylate, R' représente l'hydrogène, avec m = 70 et n = 30,
b) 51 % de styrène,
c) 9 % d'acide acrylique,
son poids moléculaire étant égal à 60 000 g/mole, comme déterminé selon la méthode décrite dans le document WO 2007/069037.

Les résultats apparaissent dans le tableau 1. Les polymères des essais 6-11 ne sont pas neutralisés donc n'illustrent pas l'invention revendiquée.

**Tableau 1**

| | 1 | 2 | 3 | 4 | 5 | 6 | 7 | 8 | 9 | 10 | 11 |
|---|---|---|---|---|---|---|---|---|---|---|---|
| | REF | AA | AA | AA | AA | IN | IN | IN | IN | IN | IN |
| Bk100 (mPa.s) | 515 | 1100 | 1200 | 1260 | 8900 | 1150 | 1100 | 1190 | 1230 | 1210 | 1200 |
| ACAV10⁶ s⁻¹ (mPa.s) | 253 | 270 | 280 | 300 | 450 | 200 | 180 | 198 | 205 | 200 | 200 |
| rétention (g/m2) | 146 | 98 | 90 | 88 | 55 | 101 | 94 | 95 | 85 | 90 | 95 |

Ce tableau démontre que les polymères selon l'art antérieur, mis en œuvre à une dose comparable à celle décrite dans l'art antérieur (essai n° 1 à 4), permettent d'augmenter la viscosité Brookfield™ et d'améliorer la rétention d'eau, mais conduisent à une viscosité ACAV bien supérieure à celle de la référence.

Si on surdose la quantité de polymère selon l'art antérieur (essai n° 5 mettant en œuvre 1 part de produit, par rapport aux essais n° 2 à 4 qui mettent en œuvre 0,15 part de produit), on constate une très forte augmentation des viscosités ; or, comme déjà indiqué, on cherche à contrebalancer cette augmentation à haut gradient de cisaillement (viscosité ACAV).

Quant aux polymères des essais n° 6 à 11, ils permettent d'augmenter la viscosité Brookfield™ et d'améliorer la rétention d'eau à un niveau comparable à celui de l'art antérieur (essais n° 1 à 5).

Chose tout à fait remarquable, ce résultat est atteint non seulement en limitant l'augmentation de la viscosité ACAV, mais en réduisant cette dernière à un niveau inférieur à celui de la référence.

De tels copolymères sont donc particulièrement destinés à des couchages à haute vitesse et/ou à extrait sec de sauce élevés.

## Revendications

1. Polymère hydrosoluble ou non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,
la somme des % a), b), c), d) et e) étant égale à 100 %, **caractérisé en ce qu'**il est partiellement ou totalement neutralisé par un ou plusieurs agents de neutralisation, à l'exclusion du polymère consistant en 51,5 % en poids d'acrylate de butyle, 40,0 % en poids de monométhacrylate de polyéthylèneglycol monométhyl éther (Mw 400), 4,85 % en poids de méthylméthacrylate, 2,00 % en poids d'acide méthacrylique, 0,10 % en poids de 2-hydroxy-2-méthyl-1-phenyl-1-propanone (CAS # 7473-98-5), 0,05 % en poids de diméthacrylate d'hexanediol.

2. Polymère selon la revendication 1, **caractérisé en ce qu'**il présente une masse molaire moyenne en poids comprise entre 1 000 000 et 6 000 000 g/mol, telle que déterminée par GPC.

3. Polymère selon une des revendications 1 à 2, **caractérisé en ce qu'**il est obtenu par des procédés de copolymérisation radicalaire conventionnelle en solution, en émulsion directe ou inverse, en suspension ou précipitation, ou par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

4. Polymère selon une des revendications 1 à 3, **caractérisé en ce qu'**il est obtenu sous forme acide et éventuellement distillé, et qu'il est partiellement ou totalement neutralisé par un ou plusieurs agents de neutralisation.

5. Polymère selon une des revendications 1 à 4, **caractérisé en ce qu'**il est partiellement ou totalement neutralisé par un ou plusieurs agents de neutralisation choisis parmi les hydroxydes de sodium et de potassium et leurs mélanges.

6. Dispersion aqueuse contenant de 0,1 % à 50 % en poids du polymère selon une des revendications 1 à 5, par rapport à leur poids total.

## Patentansprüche

1. Wasserlösliches oder wasserunlösliches Polymer, das, ausgedrückt in Gew.-% jedes der Monomere, besteht aus:
a) mindestens 30 % bis 60 % eines Hydroxy- und/oder Methoxy-Polyalkylenglykol-Monomers der Formel R - (OE)ₘ - (OP)ₙ - R', wobei
- m und n für ganze Zahlen kleiner oder gleich 150 stehen, wobei mindestens eine davon ungleich Null ist,
- OE und OP für Ethylen- bzw. Propylenoxid stehen,
- R für die Methacrylat- oder Methacrylurethan-Funktion steht,
- R' für eine Hydroxy- oder Methoxygruppe steht,
b) mindestens 20 % bis 60 % eines hydrophoben Monomers, das ausgewählt ist aus Styrol und (Meth)acrylsäureestern mit 1 bis 4 Kohlenstoffatomen,
c) mindestens 0,1 % bis 10 % eines Monomers, bei dem es sich um Acrylsäure und/oder Methacrylsäure handelt,
d) 0 % bis 5 % eines Assoziativmonomers der Formel R - (OE)ₘ - (OP)ₙ - R', wobei
- m und n für ganze Zahlen kleiner oder gleich 150 stehen, wobei mindestens eine davon ungleich Null ist,
- OE und OP für Ethylen- bzw. Propylenoxid stehen,
- R für die Methacrylat- oder Methacrylurethan-Funktion steht,
- R' für eine lineare oder verzweigte Alkyl- bzw. Aryl- oder Alkylarylgruppe mit 8 bis 32 Kohlenstoffatomen steht,
e) 0 % bis 5 % eines Monomers mit zwei ethylenischen Ungesättigtheiten,
wobei die Summe der % unter a), b), c), d) und e) gleich 100 % ist, **dadurch gekennzeichnet, dass** das Polymer durch ein oder mehrere Neutralisationsmittel teilweise oder vollständig neutralisiert ist, mit Ausnahme des Polymers bestehend aus 51,5 Gew.-% Butylacrylat, 40,0 Gew.-% Polyethylenglycolmonomethylether-Monomethacrylat (MW 400), 4,85 Gew.-% Methylmethacrylat, 2,00 Gew.-% Methacrylsäure, 0,10 Gew.-% 2-Hydroxy-2-methyl-1-phenyl-1-propanon (CAS Nr. 7473-98-5), 0,05 Gew.-% Hexandioldimethacrylat.

2. Polymer nach Anspruch 1, **dadurch gekennzeichnet, dass** das Polymer eine mittels Größenausschlusschromtographie (GPC) bestimmte gewichtsmittlere Molmasse zwischen 1.000.000 und 6.000.000 g/mol aufweist.

3. Polymer nach einem der Ansprüche 1 bis 2, **dadurch gekennzeichnet, dass** das Polymer durch Verfahren der konventionellen radikalischen Copolymerisation in Lösung, in direkter oder inverser Emulsion, in Suspension oder Ausfällung oder durch Verfahren der kontrollierten radikalischen Polymerisation, wie die Methode mit der Bezeichnung Reversible Addition Fragmentation Transfer (RAFT), die Methode mit der Bezeichnung Atom Transfer Radical Polymerization (ATRP), die Methode mit der Bezeichnung Nitroxide Mediated Polymerization (NMP) oder auch die Methode mit der Bezeichnung Cobaloxime Mediated Free Radical Polymerization, erhalten wird.

4. Polymer nach einem der Ansprüche 1 bis 3, **dadurch gekennzeichnet, dass** das Polymer in Säureform und gegebenenfalls destillierter Form erhalten wird, und dass es teilweise oder vollständig durch ein oder mehrere Neutralisationsmittel neutralisiert ist.

5. Polymer nach einem der Ansprüche 1 bis 4, **dadurch gekennzeichnet, dass** das Polymer teilweise oder vollständig durch ein oder mehrere Neutralisationsmittel neutralisiert ist, die ausgewählt sind aus Natrium- und Kaliumhydroxiden und Mischungen hiervon.

6. Wässrige Dispersion, die aus 0,1 % bis 50 Gew.-%, bezogen auf das Gesamtgewicht, des Polymers nach einem der Ansprüche 1 bis 5 besteht.

## Claims

1. Water soluble or non-water soluble polymer made of, expressed in % by weight of each monomer:
a) from 30% to 60% of at least one hydroxy and/or methoxy polyalkylene glycol monomer with the formula R - (EO)ₘ - (PO)ₙ - R', with:
- m and n designating integers that are less than or equal to 150, at least one of which is non-zero,
- EO and PO respectively designating ethylene oxide and propylene oxide,
- R designating the methacrylate or methacrylurethane function,
- R' designating a hydroxy or methoxy group,
b) from 20% to 60% of at least one hydrophobic monomer chosen from styrene and the (meth)acrylic esters with from 1 to 4 carbon atoms,
c) from 0.1% to 10% of at least one monomer which is acrylic and/or methacrylic acid,
d) from 0 to 5% of an associative monomer with the formula R - (EO)ₘ- (PO)ₙ - R', with:
- m and n designating integers that are less than or equal to 150, at least one of which is non-zero,
- EO and PO respectively designating ethylene oxide and propylene oxide,
- R designating the methacrylate or methacrylurethane function,
- R' designating an alkyl or aryl or alkylaryl group with from 8 to 32 carbon atoms, linear or branched,
e) from 0 to 5% of a monomer with two ethylenic unsaturations,
the sum of the percentages a), b), c), d) and e) being equal to 100%, **characterized in that** it is partially or totally neutralized by one or several neutralization agents, except the polymer consisting of 51.5% by weight of butylacrylate, of 40.0% by weight of polyethyleneglycol monomethyl ether monomethacrylate (Mw 400), of 4.85% by weight of methylmethacrylate, of 2.00% by weight of methacrylic acid, of 0.10% by weight of 2-hydroxy-2-methyl-1-phenyl-1-propan (CAS # 7473-98-5), of 0.05% by weight of hexanediol dimethacrylate.

2. Polymer according to claim 1, **characterized in that** it has an average molar mass by weight comprised between 1,000,000 and 6,000,000 g/mol, as determined by GPC.

3. Polymer according to one of claims 1 to 2, **characterized in that** it is obtained by processes of conventional radical copolymerization in solution, in direct or inverse emulsion, in suspension or precipitation, or by processes of controlled radical polymerization such as the method known as Reversible Addition Fragmentation Transfer (RAFT), the method known as Atom Transfer Radical Polymerization (ATRP), the method known as Nitroxide Mediated Polymerization (NMP), or again the method known as Cobaloxime Mediated Free Radical Polymerization.

4. Polymer according to one of claims 1 to 3, **characterized in that** it is obtained in the acid form and possibly distilled and that it is partially or totally neutralized by one or several neutralization agents.

5. Polymer according to one of claims 1 to 4, **characterized in that** it is partially or totally neutralized by one or more neutralization agents chosen from the hydroxides of sodium and potassium and their mixtures.

6. Aqueous dispersion containing from 0.1 % to 50% by weight of the polymer according to one of claims 1 to 5, in relation to their total weight.
